(19) Europäisches Patentamt
European Patent Office
Office européen des brevets

(11) **EP 4 553 945 A1**

(12) **EUROPEAN PATENT APPLICATION**
published in accordance with Art. 153(4) EPC

(43) Date of publication:
**14.05.2025 Bulletin 2025/20**

(21) Application number: **23857681.3**

(22) Date of filing: **21.08.2023**

(51) International Patent Classification (IPC):
*H01M 10/0569* (2010.01)    *H01M 10/0568* (2010.01)
*H01M 10/052* (2010.01)      *H01M 4/38* (2006.01)

(52) Cooperative Patent Classification (CPC):
**H01M 4/38; H01M 10/052; H01M 10/0568;**
**H01M 10/0569;** Y02E 60/10

(86) International application number:
**PCT/KR2023/012358**

(87) International publication number:
**WO 2024/043649 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  23.08.2022  KR 20220105317
08.08.2023  KR 20230103596

(71) Applicants:
• **LG Energy Solution, Ltd.**
**Seoul 07335 (KR)**

• **Korea Advanced Institute of Science and
Technology**
**Daejeon 34141 (KR)**

(72) Inventors:
• **KIM, Hong Sin**
**Daejeon 34122 (KR)**
• **KIM, Hee-Tak**
**Daejeon 34141 (KR)**
• **KWON, Hyeokjin**
**Daejeon 34141 (KR)**

(74) Representative: **Hoffmann Eitle
Patent- und Rechtsanwälte PartmbB
Arabellastraße 30
81925 München (DE)**

(54) **ELECTROLYTE COMPOSITION AND LITHIUM METAL BATTERY COMPRISING SAME**

(57)    An electrolyte composition and a lithium metal battery comprising the same are provided. The electrolyte composition comprises an ether-based solvent and a fluoroborate-based lithium salt or a non-fluoroborate-based lithium salt dissolved in the ether-based solvent, where the fluoroborate-based lithium salt or the non-fluoroborate-based lithium salt and the ether-based solvent form a complex, and the electrolyte composition has low corrosivity to a lithium metal anode and also enables formation of a uniform coating film on the lithium metal anode.

【FIG. 1a】

**Description**

**[TECHNICAL FIELD)**

CROSS CITATION WITH RELATED APPLICATION(S)

This application is a National Phase entry pursuant to 35 U.S.C. §371 of International Application No. PCT/KR2023/012358, filed on August 21, 2023, and claims priority to and the benefit of Korean Patent Application No. 10-2022-0105317 filed on August 23, 2022 and Korean Patent Application No. 10-2023-0103596 filed on August 8, 2023, the disclosures of which are incorporated herein by reference in their entirety.

The present disclosure relates to an electrolyte composition and a lithium metal battery comprising the same.

**[BACKGROUND]**

Lithium (Li) metal is the most promising anode material for next-generation batteries. When Li metal is electrodeposited on a general organic solvent along with a lithium salt, it forms a three-dimensional microstructure with a large surface area, and reacts with a liquid electrolyte to form a SEI (Solid-Electrolyte Interphase). However, the recent report shows that continuous collapse and regeneration of SEI and formation of inert Li are induced in the process of plating/stripping of Li metal, which leads to cell failure.

Basically, in order to control the morphology of lithium metal precipitates in electrolyte design, a strategy for forming a specific SEI phase which is considered useful for lithium reversibility through decomposition of electrolyte species is adopted. In previous studies, it has been known that increasing the content of $Li_2O$, $LiF$, $Li_2S$, and $LiN_xO_y$ crystalline bodies or organic materials having excellent physicochemical properties positively affect the stability of SEI, thereby positively affecting the reversibility of the Li metal anode.

Therefore, many researchers continue to study focusing on adding additives that react favorably with Li to form a stable SEI, or dissolution engineering (high-concentration electrolyte (HCE), local high-concentration electrolyte (LHCE), and electrolyte using a fluorinated solvent) that promotes this reaction.

However, a large number of SEI materials proposed in such studies can extend the life of lithium metal batteries(LMB), whereas they have a problem that high Coulombic Efficiency (CE) electrolytes causes $Li^+$ to be lost rather than forming inactive Li3 which affects the formation of SEI.

Actually, compared to recent all-solid-state batteries, liquid electrolyte-based LMBs have a technological gap in terms of cycle life, which appears to be because the coulombic efficiency is lowered in LMB due to corrosion between the liquid electrolyte and $Li_3$. Further, lithium metal batteries operate with much larger amounts of electrolyte (>2.4 g $Ah^{-1}$) than batteries based on traditional anode chemistries (e.g. graphite or silicon anode, ~1.5 g $Ah^{-1}$), which consumes electrolyte and therefore limits the cycle life. Further, recently developed electrolytes have similar or worse calendar characteristics compared to existing electrolytes, and still have insufficient performance for use in electric vehicles that must be driven for long periods of time, such as 10 years or more.

Therefore, the formation of SEI by minimizing the loss of $Li^+$ and electrolyte beyond the morphological uniformity of electrodeposited lithium is considered an issue that needs to be urgently solved in this technical field.

**[DETAILED DESCRIPTION OF THE INVENTION]**

**[Technical Problem]**

In this regard, embodiments according to the present disclosure show the possibility that the problem of the lithium metal anode having a high-density lithium morphology can be solved through control of the liquid electrolyte, but has the problem that lithium is lost due to lithium corrosion with the liquid electrolyte. Thus, the present inventors attempts to apply a borate-pyran-based electrolyte to solve the limitation of the conventional liquid electrolyte-based LMB, which has a lithium electrolyte corrosion problem.

**[Technical Solution]**

Hereinafter, an electrolyte composition for a lithium metal battery according to specific embodiments of the disclosure will be described.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The terms used herein are provided to describe exemplary embodiments but not to limit the inventive concept. The singular forms include plural forms unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

**Electrolyte composition**

According to one embodiment of the present disclosure, there is provided an electrolyte composition comprising: an ether-based solvent having an ether group; and a fluoroborate-based lithium salt or a non-fluoroborate-based lithium salt dissolved in the ether-based solvent, wherein the fluoroborate-based lithium salt or the non-fluoroborate-based lithium salt and the ether-based solvent form a complex. The electrolyte composition may be an electrolyte composition for a lithium metal battery.

Specifically, the ether-based solvent may be a cyclic ether-based solvent, and the ether-based solvent may have one ether group.

The electrolyte composition may be specifically a fluoroborate-cyclic ether based electrolyte, wherein this fluoroborate-cyclic ether-based electrolyte has low corrosivity and can minimize the Coulombic inefficiency of forming SEI in lithium by finely passivating the lithium electrolyte interface through LiF reconstruction. In addition, the fluoroborate-cyclic ether-based electrolyte can show ideal lithium deposition and high lithium plating/stripping efficiency, and can meet the requirements necessary for long-term operation of LMB at low N/P and E/C ratios.

In an exemplary embodiment, the fluoroborate-based lithium salt may include a fluoroborate-based lithium salt of the following Formula 1,

$$[\text{Formula 1}] \qquad LiBF_xR_y$$

wherein, R is $CF_3$ or styrene, and x+y=4.

In an exemplary embodiment, the non-fluoroborate-based lithium salt may include a lithium salt of an anion having a Group 13 element other than boron as a central atom, or a lithium salt of a halide-based anion that having a boron central atom and consisting of halides other than fluoride. For example, the anion-based lithium salt having the Group 13 element as a central atom may include $LiAlF_4$, $LiGaF_4$, and the like.

In an exemplary embodiment, the ether-based solvent may include at least one solvent selected from the group consisting of tetrahydrofuran(THF), tetrahydropyran(THP), furan, pyran, oxirane, oxetane, oxepane, and dioxane. Specifically, tetrahydrofuran(THF) and tetrahydropyran(THP) may be cyclic ether solvents in which a functional group is added to a cyclic ether, furan and pyran may be unsaturated cyclic ether solvents containing partial double bonds, oxirane, oxetane, and oxepane may be trigonal, tetragonal, and heptagonal cyclic ether solvents, respectively, and dioxane may be a solvent containing a plurality of ether groups. For example, tetrahydropyran(THP), tetrahydrofuran(THF), and diethyl ether(DEE), which have one ether group and a functional group added to the cyclic ether, may have significantly lower reduction potential than other solvent molecules. However, in the case of linear molecules such as DEE, sine the $Li^+$ binding energy is relatively low, it may promote the coordination of anions, which may thus be disadvantageous. On the other hand, THP has a relatively high boiling point compared to THF, and thus may be chemically stable as a Group 6 ring, which may thus be more preferable.

In an exemplary embodiment, the fluoroborate-based lithium salt may be $LiBF_4$ and the ether-based solvent may be tetrahydropyran (THP). In the case of a combination of the lithium salt and a solvent, it may form a trifluoroborate-ether complex to form a uniform SEI structure.

In an exemplary embodiment, the electrolyte composition may further comprise at least one selected from the group consisting of an ion-conductive lithium salt and an additive. Specifically, the ion conductive lithium salt may include at least one lithium salt selected from the group consisting of $LiPF_6$, lithium difluoro(oxalato)borate (LiDFOB), lithium bis(oxalato)borate (LiBOB), lithium triflate (LiTf), lithium bis(pentafluoroethanesulfonyl)imide (LiBETI), lithium cyano(trifluoromethanesulfonyl)imide (LiCTFSI), $LiNO_3$, lithium bis(trifluoromethanesulfonyl) imide (LiTFSI), lithium bis(fluorosulfonyl)imide (LiFSI), $LiAsF_6$, $LiClO_4$, and $LiSbF_6$. Further, the additive may include at least one selected from a lithium salt containing -F, such as LiDFOB and LiFSI, and a solvent containing -F, such as fluoroethylene carbonate (FEC), difluoroethylene carbonate (DFEC), trifluoroethylene carbonate (TFEC), 1,1,2,2-tetrafluoroethyl-2,2,3,3-tetrafluoropropyl ether (TTE), tetrafluoroethyl trifluoroethyl ether (TFTFE), 1,1,2,2-tetrafluoroethyl-1H,1H,5H-octafluoropentyl ether (TFOFE), bis(2,2,2-trifluoroethyl)ether (BTFE), and 1H, 1H,5H-octafluoropentyl-1,1,2,2-tetrafluoroethyl ether (OFE), which function as a LiF forming agent. Preferably, the ion-conductive lithium salt is LiTFSI, and the additive may be FEC functioning as a LiF forming agent.

In an exemplary embodiment, the anion of the ion conductive lithium salt may have a lower Li+ binding energy than the anion of the fluoroborate-based lithium salt. Consequently, the anion of the fluoroborate-based lithium salt and THP mainly interact with Li+ present in the primary solvation sheath, while the anion of the ion conductive lithium salt and the LiF forming agent may exist mostly as free molecules.

In an exemplary embodiment, the electrolyte composition may have B-O stretching and F-B-F bending signals in surface-enhanced Raman spectroscopy (SERS) analysis. Specifically, during potential strengthening, a pair of peaks around ~ 490 cm$^{-1}$ and ~1350 cm$^{-1}$ are gradually strengthened, which may correspond to B-O stretching and F-B-F bending signals, respectively. Consequently, it can be confirmed that $BF_3$ and ether group have been complexed to the THP molecule.

**Lithium metal battery**

In another embodiment of the present disclosure, there is provided a lithium metal battery comprising: the above-mentioned electrolyte composition; an anode including a lithium metal thin film formed on an anode current collector; a cathode including a cathode active material layer formed on the cathode current collector; and a separator formed between the anode and the cathode.

In an exemplary embodiment, the fluoroborate lithium salt or the non- fluoroborate lithium salt and the cyclic ether-based solvent may form a complex on the surface of the lithium metal thin film, for example, the fluoroborate and the ether-based solvent may form a trifluoroborate-ether complex.

In an exemplary embodiment, the lithium metal battery may further comprise an SEI layer formed on the lithium metal thin film, wherein the SEI layer may have only a signal for LiF(111) or LiF(220) lattice in a fast Fourier transform(FFT) image. Meanwhile, the SEI layer may be free of S, N, and B elements. In particular, the absence of S, N and B elements in the SEI layer may mean that LiF has been formed by the non-fluorination reaction of FEC rather than BF4$^-$ or TFSI$^-$.

In an exemplary embodiment, the SEI layer may be formed through a reconstruction process. Specifically, $BF_3$-THP is formed on the surface of the lithium metal thin film, LiF precipitates on lithium metal (Li0), $BF_3$-THP reacts with the initial LiF particles to convert back to $LiBF_4$. $LiBF_4$ may passivate the Li surface with fine LiF crystals by repeating the process of forming $BF_3$-THP while precipitating LiF again at the site where Li0 is exposed.

**[Advantageous Effects]**

Embodiments of the present disclosure provide a fluoroborate-cyclic ether based electrolyte as an electrolyte composition for a lithium metal battery. The fluoroborate-cyclic ether-based electrolyte has high reduction stability and finely passivates the lithium-electrolyte interphase through the LiF reconstitution process, and minimizes the dendrite-free lithium form and Coulomb inefficiency to enable the formation of a lithium-electrolyte interphase.

Further, in embodiments of the present disclosure, the fluoroborate-cyclic ether-based liquid electrolyte Li‖Li-Ni$_{0.8}$Co$_{0.1}$Mn$_{0.1}$O$_2$(NCM811) pouch cell having a long cycle life of 500 cycles at limited electrolyte/anode capacity ratio (E/C, 1.82 g Ah$^{-1}$, energy density 424 Wh kg$^{-1}$) is provided, thereby capable of achieving 250 cycles at an E/C of 1.18 g/Ah$^{-1}$ (energy density of 456 Wh kg$^{-1}$), which corresponds to a value that much surpass the E/C ratio of the latest LMB reported so far.

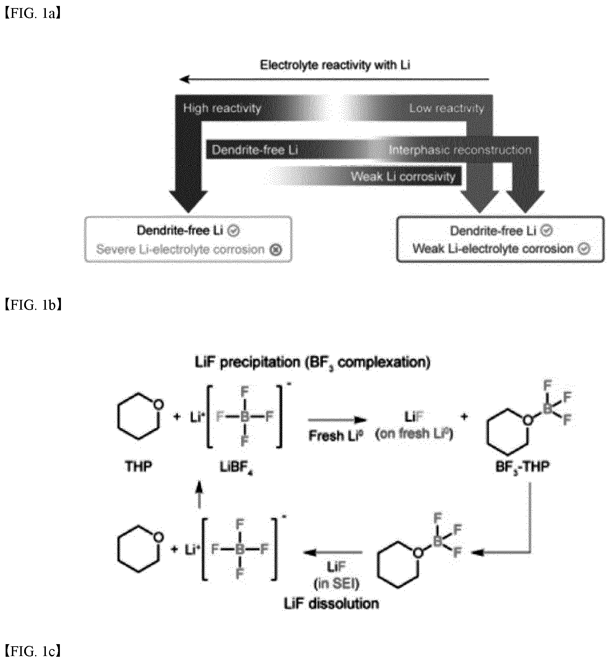

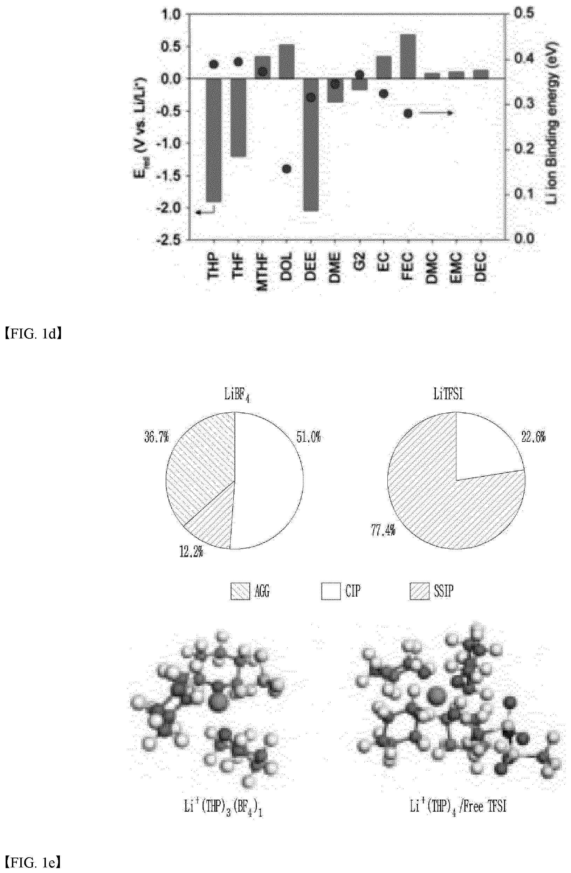

In the design of the electrolyte according to one embodiment of the present disclosure, the inherent reactivity of the electrolyte with Li is alleviated to improve the reduction stability at the anode-electrolyte interface (FIG. 1a), which involves fine passivation of Li due to dynamic reorganization of LiF crystalline bodies in SEI (FIG. 1b). The borate-pyran-based electrolyte has the key function that the LiF reconstruction process imparts high uniformity and passivation to the SEI to delay the consumption of Li and the electrolyte, which may be applicable to LMB even under E/C 2 gAh$^{-1}$ conditions.

**[BRIEF DESCRIPTION OF THE DRAWINGS]**

FIG. 1a is a design concept of a borate-pyran based electrolyte, which schematically illustrates the electrolyte reduction process at Li anode.

FIG. 1b shows the $BF_3$ complexation reaction involved in electrodepositing LiF on Li0 from THP and $LiBF_4$, followed by $BF_3$-THP reaction, LiF dissolution and returning to THP and $LiBF_4$, wherein the purple atom represents the atom participating in the formation of the $BF_3$ adduct among BF$_4^-$, and orange and green F represent F of LiF reconstituted on the Li0 surface and F of LiF initially formed in SEI, respectively.

FIG. 1c illustrates the reduction potential and Li$^+$ binding energy of various organic solvents.

FIG. 1d illustrates the Li$^+$ dissolution structure distribution and the most dominant structure of each anion in the borate-pyran based electrolyte.

FIG. 1e illustrates the primary reduction potential of an ether electrolyte (4 M LiFSI DME) and a borate-pyran based electrolyte (0.4 M $LiBF_4$ 0.4 M LiTFSI THP +20% FEC), wherein the blue square represents the anion reduction potential, the red square represents the solvent reduction potential, and the gray square represents the reduction potential for the secondary dissolved structure.

FIG. 2a shows the SEI microstructure through cryo-TEM and XPS, which illustrates a Cryo-TEM image of the SEI layer of Li metal during aging in a borate-pyran based electrolyte.

FIG. 2b illustrates single crystal LiF particles in the SEI of electrodeposited Li and reconstituted LiF in the SEI of aged Li.

FIG. 2c illustrates a comparison of the crystalline size of inorganic particles in SEI depending on the aging time.

FIGS. 2d and 2e illustrate the results of XPS spectrum analysis of the atomic concentrations and curve fitting of oxygen and fluorine in SEI before (d) and after (e) aging for 12 hours.

FIG. 3a illustrates $BF_3$ complexation and LiF dissolution in borate-pyran electrolyte, which illustrates an in-situ SERS spectrum (middle) and galvanostatic voltage profile (left) for a borate-pyran based electrolyte in a Li∥Cu-Ag (SERS substrate) cell during potential drop and Raman intensities (right) corresponding to electrolyte components, respectively.

FIG. 3b illustrates the energy diagram of the $BF_3$ complexation reaction in $LiBF_4$.

FIG. 3c illustrates the $^{11}B$ NMR spectrum of $BF_3$-THF having LiF salt dissolved at various concentrations.

FIG. 3d illustrates the relative intensity of the $^{11}B$ NMR spectrum normalized by integrating all peak areas.

FIG. 3e illustrates a comparison of the ionic conductivity of LiF solutions with different concentrations in different types of solvents.

FIG. 3f schematically illustrates the reconstitution process of SEI in the borate-pyran electrolyte.

FIG. 4a is an electrochemical analysis of the liquid electrolyte, which illustrates the pressurized Li plating setting and the morphology of Li electrodeposited (2 mAh $cm^{-2}$) on a Cu current collector under 290 kPa pressure at a current density of 0.5 mA $cm^{-2}$.

FIG. 4b illustrates a comparison of the coulombic efficiency of Li plating/stripping in Li∥Cu cells having different electrolyte configurations.

FIG. 4c illustrates that the volume usage during the modified Auerbach's method is quantified by titration gas chromatography.

FIG. 4d illustrates the interfacial resistance and normalized resistance (relative to the $R_{interface}$ at t = 0) of Li∥Li coin cells in various electrolytes over time, wherein the dotted line represents the curve fitted according to an empirical power law.

FIG. 4e illustrates the coulombic efficiency of Li plating/aging/stripping in a Li∥Cu coin cell over time.

FIG. 4f illustrates the average corrosion rate of plated Li during aging.

FIG. 5a schematically illustrates the Li∥NCM811 bi-cell configuration for pouch cell performance analysis.

FIG. 5b illustrates the results of comparing the electrolyte volume of LMB with LIB.

FIG. 5c illustrates a comparison of the speed performance of LMB, wherein 0.2C constant current and 4.25V constant voltage modes are applied in all charging processes.

FIGS. 5d and 5e illustrate the cycling performance and coulombic efficiency of LMB.

FIG. 5f illustrates a comparison of the swelling degree of Li∥NCM811 bi-cell using three electrolytes with the same initial cell thickness, wherein the data for each cycle is calculated by measuring the thickness at several locations in one pouch cell.

FIGS. 6a to 6c illustrate (a) MD snapshots at t=0, (b) RDF, and (c) N(r) in 0.4M $LiBF_4$ 0.4M LiTFSI THP 20% FEC electrolyte, respectively.

FIGS. 7a to 7d are MD snapshots showing the ion distribution at various time zones in 0.4M $LiBF_4$ 0.4M LiTFSI THP 20% FEC electrolyte, which illustrate the distributions at (a) t=0 ns, (b) t=1.67 ns, (c) t=3.33 ns, and (d) t=5.00 ns, respectively.

FIGS. 8a to 8c illustrate (a) MD snapshots at t=0, (b) RDF, and (c) N(r) in 4M LiFSI DME electrolyte, respectively.

FIGS. 9a to 9d are MD snapshots showing the ion distribution at various time zones in 4M LiFSI DME electrolyte, which illustrate the distributions at (a) t=0 ns, (b) t=1.67 ns, (c) t=3.33 ns, and (d) t=5.00 ns, respectively.

FIGS. 10a to 10f are XPS spectra of the SEI layer, which illustrate (a) F1s, (b) O1s, (c) C1s, (d) N1s, (e) S2p and (f) B1s spectra of 1 M $LiPF_6$ EC/EMC +2% VC (black spectrum) and 0.4 M $LiBF_4$ 0.4 M LiTFSI THP 20% FEC (red spectrum).

FIGS. 11a and 11b illustrate the atomic percent of SEI layer for (a) 1M $LiPF_6$ EC/EMC +2% VC and (b) 0.4M $LiBF_4$ 0.4M LiTF SI THP 20% FEC.

FIG. 12a schematically illustrates an in-situ Raman cell, which is an in-situ SERS equipment used in the present disclosure.

FIG. 12b illustrates an SEM image of a laboratory-fabricated SERS substrate (AgNPs on Cu grid) and a planar image of an in-situ Raman cell.

FIG. 13a illustrates assignment of peaks by comparing the ex-situ Raman spectrum of the 0.4 M $LiBF_4$ 0.4 M LiTF SI THP 20% FEC electrolyte and the spectrum of the in-situ Raman cell.

FIG. 13b illustrates the in-situ Raman spectrum of 0.8 M LiTFSI THP 20% FEC electrolyte.

FIG. 14a is a DFT simulation of the $BF_3$ complexation reaction using various solvents, which illustrates the energy diagram of the $BF_3$ complexation reaction of $LiBF_4$ depending on the organic solvent.

FIG. 14b illustrates the optimized molecular structure of the $BF_3$ adduct in a DFT simulation of the $BF_3$ complexation reaction.

FIGS. 15a to 15d are optical images of 1M LiF solution, which illustrate (a) 1 M LiF $BF_3$-THP, (b) 1 M LiF DME, (c) 1 M LiF THF, and (d) 1 M LiF THP solutions, respectively.

FIG. 16 is an XPS spectrum of the SEI layer for electrodeposited lithium and aged lithium, which illustrates (a) F1s, (b) O1s, (c) C1s, (d) N1s, (e) S2p and (f) B1s spectra, wherein the electrodeposited lithium has a black spectrum, and the lithium aged for 12 hours has a red spectrum.

FIGS. 17a and 17b are Cryo-TEM images of the SEI layer of Li metal in 0.8M LiTFSI THP 20% FEC electrolyte during aging, which are (a) time t=0 and (b) time t=12, respectively.

FIGS. 18a to 18c illustrates morphology of lithium electrodeposited on (a) 1M $LiPF_6$ EC/EMC 2% VC electrolyte, (b) 1.5M LiFSI DME/TTE electrolyte, and (c) 0.4M $LiBF_4$ 0.4M LiTFSI THP 20% FEC electrolyte.

FIGS. 19a and 19b illustrates the discharge capacity and coulombic efficiency of the Li‖NCM523 full cell, respectively.

FIG. 20 illustrates the ionic conductivity of representative electrolytes.

FIGS. 21a and 21b illustrate (a) the results of measuring the oxidation stability of various electrolytes in a Li‖Al battery using LSV, and (b) an enlarged view of partial areas of (a) results.

## [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In Examples and Comparative Examples, 1M $LiPF_6$ EC/EMC(1:1 v/v, Phanax) 2% VC(99.5%, Sigma-Aldrich) and 1.5M LiFSI(99.9%, Sigma-Aldrich) DME(Sigma-Aldrich)/TTE(SynQuest) Labs.)(22:88 v/v) were used as control electrolytes. THP(99%), $LiBF_4$(99.99%) and LiTFSI(99.95%) were purchased and used from Sigma-Aldrich, and FEC (98%) was purchased and used from TCI. The electrolyte compositions of Examples and Comparative Examples were all prepared in an argon-filled glove box and had the following compositions.

## Example 1: Borate-pyran based liquid electrolyte

A borate-pyran-based liquid electrolyte was prepared by mixing 0.4M $LiBF_4$ as a fluoroborate lithium salt, 0.4M LiTFSI as an ion conductive lithium salt, and THP/FEC 8:2 v/v as a solvent.

## Comparative Example 1: Conventional low-corrosive electrolyte

A low-corrosive electrolyte was prepared by mixing 1M $LiPF_6$ as a fluoroborate lithium salt, 1:1 v/v of EC/EMC (hexafluorophosphate ethylene carbonate/ethyl methyl carbonate) as a solvent, and 2% VC as an additive.

## Comparative Example 2: Highly corrosive electrolyte

1M LiFSI as an ion conductive lithium salt and DME/TTE (1,2-dimethoxyethane/1,1,2,2-tetrafluoroethyl-2,2,3,3-tetrafluoropropyl ether) 22:78 v/v as a solvent were mixed to prepare a highly corrosive electrolyte.

## Production Example: Fabrication of pouch cell

A prototype pouch cell was fabricated as follows. Li anode (40$\mu$m, mixed metal) and double-sided coated $LiNi_{0.8}Mn_{0.1}Co_{0.1}O_2$ cathode (NMC811, provided by LG Energy Solution, 18.78mg cm$^{-2}$ area load, active material: Super P C65:PVDF=96:2:2) were respectively punched into a size of 40mm $\times$ 60mm and 30mm $\times$ 50mm. Cu foil and NMC cathode were welded with Ni and Al tabs using an ultrasonic welding machine. All electrodes and separators were stacked and packaged in an aluminum pouch bag. 0.4 M $LiBF_4$ 0.4 M LiTFSI THP/FEC of Example 1 was injected at 200$\mu$l(1.92 g Ah$^{-1}$) or 130$\mu$l(1.24 g Ah$^{-1}$) to fabricate a Li‖NCM811 pouch cell. All cell assembly processes were performed in an argon-filled glovebox.

## Experimental Method

<u>Li morphology and SEI properties</u>

SEM analysis was performed using field emission scanning electron microscopy (FE-SEM, Sirion by FEI). The cross-sectional view of electrodeposited Li (0.5 mA cm$^{-2}$ and 2 mAh cm-2) was observed through FIB-SEM (Helios Nanolab 450 F1, FEI), and surface cleaning was performed at 5 kV to remove the damaged layer caused by Ga ions.
The composition of SEI was analyzed by In-Situ X-ray Photoelectron Spectroscopy (Axis-Supra by Kratos) using Al X-rays (hv=1486.7 eV).

<u>Cryo-TEM</u>

Cryo-TEM analysis was performed using a 200 kV transmission electron microscope (TEM, Glacios, Thermo Fisher), and the microstructure of SEI electrodeposited on Li was observed while minimizing reaction with air and damage from a beam. The lithium electrodeposited (0.5 mA cm$^{-2}$ and 1 mAh cm$^{-2}$) TEM grid (200 mesh Cu with lacey carbon film) was placed into a microtube (Eppendorf) in an Ar-filled glove box, then removed, and immediately placed in liquid nitrogen, and then the sample was transferred to the TEM instrument while completely immerged in liquid nitrogen via an autoloader capsule and a cassette system.
NMR: 400ul DMSO (200ul Ely + 1.2 ml DME) → 400ul solution + 1 ml DME

<u>In-situ SERS</u>

The BF$_3$ adduct formed on the anode surface was detected using an in-situ Raman cell (EQ-STC-RAMAN, MTI). As a SERS substrate, an Ag-Cu grid was prepared and used as follows. A 200-mesh Cu grid was immersed in 5 mmol AgNO$_3$ aqueous solution for 2 minutes, the Cu-Ag grid that underwent galvanic exchange of Cu and Ag was washed several times with DI water. After vacuum drying for one day, the in situ Raman cell was assembled in an argon-filled glove box. Raman signals were measured by applying a 514 nm laser with an acquisition time of 60 seconds.

<u>Electrochemical Experiment</u>

For the electrochemical measurement, a 2032 type coin cell containing 50 $\mu$l of electrolyte was used.
Average CE was measured according to the following standard protocol: (1) A formation cycle of electrodepositing 5 mAh cm$^{-2}$ of Li on Cu at a current density of 0.5 mA cm$^{-2}$ and stripping at 1.0 V was performed; (2) 5 mAh cm$^{-2}$ Li was electrodeposited on Cu at a current density of 0.5 mA cm$^{-2}$; (3) plating/stripping 1 mAh cm$^{-2}$ of Li at 0.5 mA cm$^{-2}$ current density for 10 cycles were repeated; and (4) All Li was stripped to 1.0V. Before CE measurements, the Li‖Cu cell was maintained at 0 V for 24 hours before cycling so as to form SEI on the Cu substrate.
LSV, ionic conductivity, and R$_{interface}$ were measured using a Solartron 1470E frequency response analyzer.
EIS was performed at a perturbation degree of 10 mV in the frequency range of 1 MHz to 0.1 Hz.
Li‖NCM523 coin cell test was performed by using LiNi$_{0.5}$Mn$_{0.3}$Co$_{0.2}$O$_2$ cathode (NCM532, 21.47 mg cm$^{-2}$ area load, NCM523:Super P C65:PVDF=94:3:3), 40 $\mu$m Li anode, PE separator (Asahi, 19 $\mu$m).
During operation of the Li‖NCM811 pouch cell of Production Example, clamping torque was applied using a pressure jig with a 1 mm silicone pad to uniformly pressurize. The initial pressure was 286 kPa. For cell testing, a WBCS3000L battery tester was used at 25°C. All cell assembly processes were performed in an argon-filled glove box.

<u>DFT calculation</u>

Density functional theory calculation(DFT) was performed using Materials Studio's program package DMol3 (Accerlrys Inc.). In Dmol3, a numerical orbital was used as a basis function, with each orbital corresponding to an atomic orbital. In addition, the double-numeric-plus-polarization (DNP) function and a global orbital cutoff of 4Å were utilized.
DFT calculation were performed using a gradient correction(GGA) function using the Perdew-Bueke-Ernzerhof (PBE) exchange correlation function. The dmol3-PBE COSMO calculation was applied for the solvent environment. Tolerances for energy, gradient, and displacement convergence were 0.00001 hartree, 0.002 hartree/Å, and 0.005 Å, respectively. The force tolerance of the self-consistent-field (SCF) cycle was $1.0 \times 10^{-6}$. The DFT-D2 method in the figure was adopted to describe the van der Waals interaction (vdW), and the method was optimized for several DFT functions.
The reduction potential of Li$^+$ primary melt coating (Ered) was calculated using Equation 1 below.
[Equation 1]

$$E_{red}(V \; vs. \; Li/Li^+) = -[\{\varepsilon(sol^-) - \varepsilon(sol)\} - \{\varepsilon(Li^0) - \varepsilon(Li^+)\}]/F \qquad (1)$$

wherein $\varepsilon(sol-)$ and $\varepsilon(sol)$ are the dissolution free energies of the reduction and initial complexes at 0 K in a gas phase, respectively, and $\varepsilon(Li0)$ and $\varepsilon(Li+)$ are the free energies of reduction and initial Li+ at 0 K.

MD calculation

A molecular dynamics calculation was performed using Materials Studio's Forcite program package (Accerlrys Inc.). All components were constructed in a simulation cell through geometric optimization, and charges were applied through DFT.

MD was performed using the Forcite module and Forcefield COMPASS III. MD simulations were performed for 0.4M LiBF$_4$ 0.4M LiTFSI THP 20% FEC (16 Li$^+$, 8 BF$_4$$^-$, 8 TFSI$^-$, 162 THP and 57 FEC) at 298 K and 1 atm. The system was geometrically stabilized using a smart algorithm with a convergence tolerance of 0.001 kcal mol$^{-1}$ Å$^{-1}$.

The system was then equilibrated in 1ns NPT and 1ns NVT ensembles using the Nose algorithm with a Q ratio of 0.1. After equilibration, simulation data was collected by running a 5ns NVT with a 1fs time step while sampling at a time interval of 45fs.

The radial distribution function (RDF) was calculated using Equation 2 below,

[Equation 2]

$$g_{bulk\ phase}(r) = \frac{dn_r}{4\pi r^2 dr * \rho}$$

The coordinate number N(r) was calculated using Equation 3 below.

[Equation 3]

$$N(r) = 4\pi\rho \int_0^{r'} g(r)r^2 dr \qquad (3)$$

**Experimental Example 1: Electrolyte Design**

The reduction potential of electrolyte molecules and dissolved complexes has a significant impact on the reduction stability of the entire electrolyte system. In recent studies, it has been confirmed that electrolyte molecules bound to Li$^+$ have a much higher thermodynamic influence on reductive decomposition than free molecules.

An important goal of the present disclosure is to minimize the decrease in Coulomb efficiency due to reductive decomposition of the electrolyte. For this purpose, a weakly reactive molecule, rather than a highly reactive anion (e.g., FSI$^-$ or DFOB$^-$) like conventional HCE or LHCE, was applied as the electrolyte that dominantly participates in the dissolution sheath of Li$^+$. The reduction potential and Li$^+$ binding energy of various organic solvents were investigated through density functional theory (DFT, FIG. 1c). Additionally, except for 2-methyltetrahydrofuran(MTHF) and 1,3-dioxoolane(DOL), ether solvents showed lower reduction potentials than carbonates. In particular, tetrahydropyran(THP), tetrahydrofuran(THF), and diethyl ether(DEE), which have one ether group, were found to have significantly lower reduction potential than other solvent molecules.

In the case of DEE, the Li$^+$ binding energy is relatively low (0.32 eV), which promotes coordination of anions, which is opposite to what is pursued in the present disclosure. On the other hand, cyclic ethers having one ether group, such as tetrahydrofuran (THF) and tetrahydropyran (THP), show high binding energy (~0.39 eV) with Li$^+$, and are therefore expected to participate well in the variation of Li$^+$. Among these, THP has a relatively high boiling point of 88°C compared to THF (66°C), and was selected as the main solvent due to its chemical stability as a Group 6 ring (the ring strain energy of THP is 0.5 kcal mol-1, that of THF is 5.9 kcal mol-1).

This combination of LiBF$_4$/THP electrolyte can trigger a reconstitution reaction in SEI, but the ionic conductivity is very low (2.9×10$^{-6}$ S cm$^{-1}$) and it is relatively stable toward Li metal compared to other Li salts with high dissociability. Therefore, LiTFSI was added as an auxiliary salt for imparting ionic conductivity to the LiBF4/THP electrolyte. FEC was added as the initial LiF source for the reconstitution reaction.

According to the above-mentioned flow, a fluoroborate-cyclic ether-based electrolyte (0.4 M LiBF$_4$ 0.4 M LiTFSI THP 20% FEC) was prepared, and its properties as an electrolyte for lithium metal batteries were investigated.

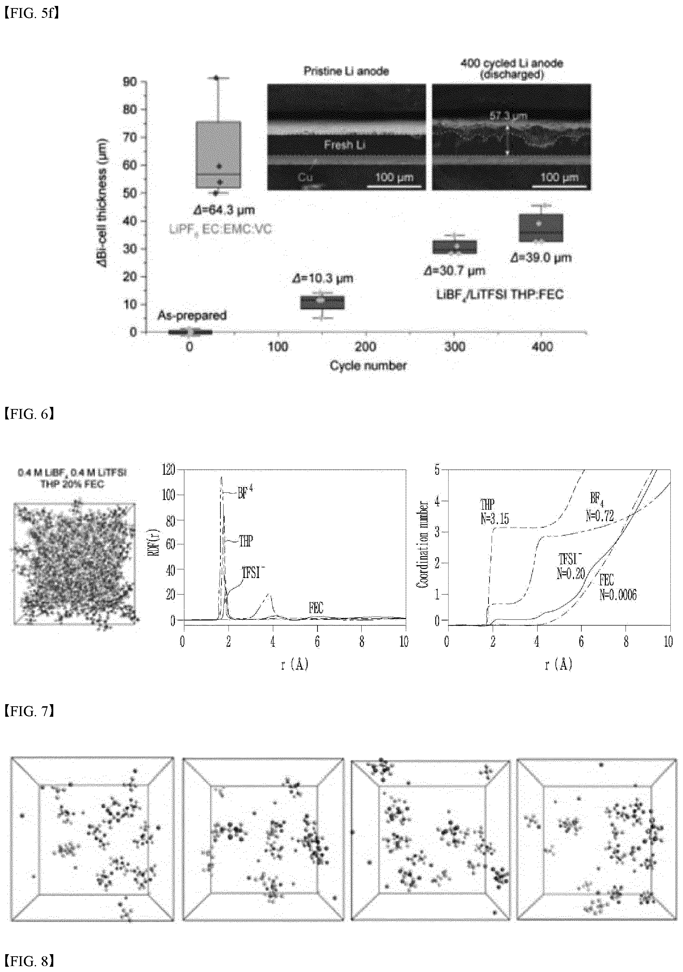

The dissolution structure of fluoroborate-cyclic ether-based electrolyte was investigated through molecular dynamics (MD) simulation. As a result, the ether groups of three to four THP molecules in the primary solvation sheath interact closely with $Li^+$, whereas other molecules, including TFSI-, $BF_4^-$, and FEC, showed non-uniform average coordination numbers (each 0.20, 0.72, and 0.0006, FIG. 6 and FIG. 7).

Observation of the $Li^+$ dissolution structure showed that only 12.2% of $BF_4^-$ showed solvent separated ion pairs(SSIP), whereas 77.4% of TFSI- showed SSIP (FIOG. 1d). Because FEC has a weak $Li^+$ binding energy due to the electron-withdrawing fluorine group, it did not participate in the primary solvation sheath of $Li^+$.

From such results, it can be seen that THP and $BF_4^-$ mainly interact with $Li^+$ participating in the first solvation sheath, while TFSI- and FEC mostly exist as free molecules.

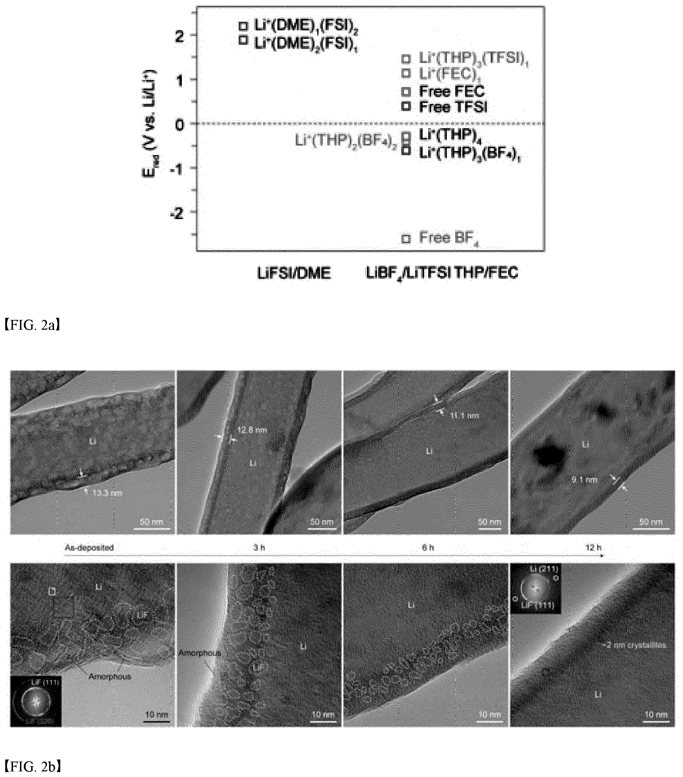

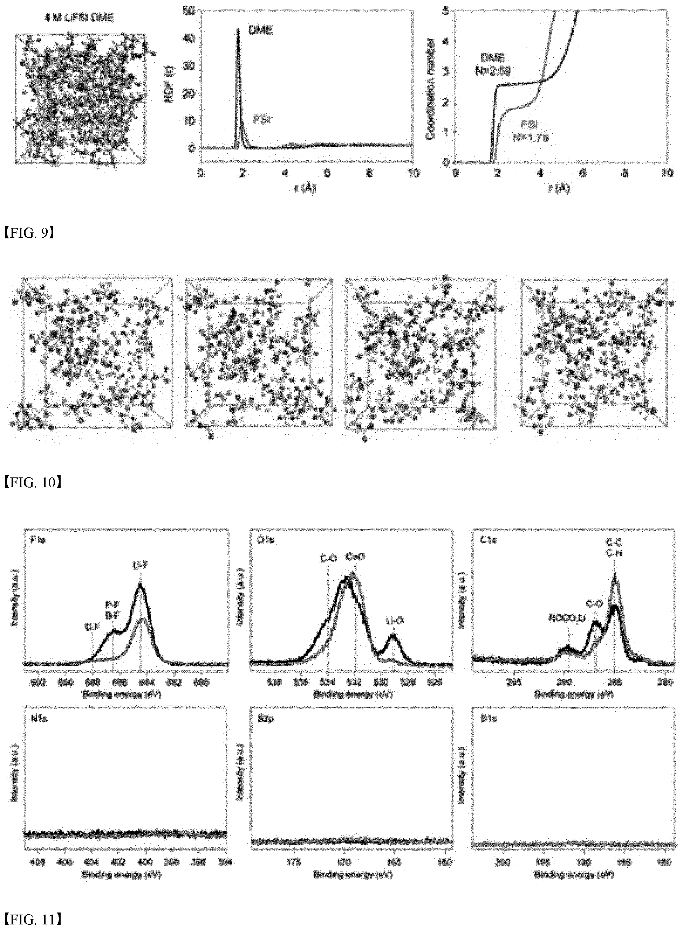

Meanwhile, the reduction potential of the primary $Li^+$ solvation sheath was also investigated (FIG. 1e). When the commonly used LiFSI/DME electrolyte was used as a control, it showed contact ion pairs (CIPs) or ion aggregates (AGGs) involving one or two FSI- (FIGS. 8 and 9).

The solvation sheaths showed high reduction potentials of 1.90 V vs $Li/Li^+$ or 2.21 V vs $Li/Li^+$, respectively, as previously reported. The FSI-rich $Li^+$ dissolution structure are known to have a high reduction potential and rapidly decompose FSI on the Li surface to form an inorganic-rich SEI.

In contrast, the $Li^+$ dissolution structure of the borate-pyran based electrolytes is mostly a contact ion pair (CIPs) with $BF_4^-$ ($Li^+(THP)_3(BF_4)_1$) or SSIP ($Li^+(THP)_4$), which have a reduction potential of -0.606V vs Li/Li+ or -0.284V vs $Li/Li^+$, respectively. Further, free FEC and free TFSI- have lower reduction potentials than when bound to $Li^+$, 0.725 V vs $Li/Li^+$ and 0.402 V vs $Li/Li^+$, respectively.

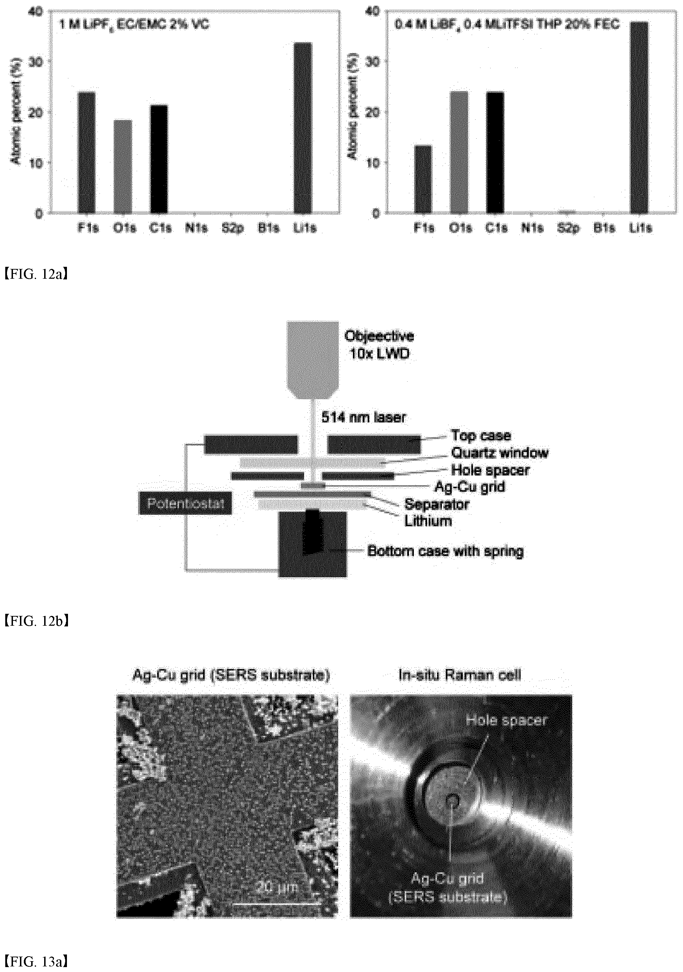

On the other hand, almost no nitrogen, sulfur and boron species (>1% atomic percent) were observed in SEI formed from borate-pyran based electrolyte. Consequently, it can be confirmed that almost no reductive decomposition of TFSI- and $BF_4^-$ occurred (FIGS. 10 and 11).

**Experimental Example 2: Analysis of the reorganization reaction of the film structure**

The microstructure of SEI on the Li metal surface in borate-pyran based electrolyte was investigated by cryogenic transmission electron microscopy (cryo-TEM) (FIG. 2a). Only signals for LiF(111) or LiF(220) lattices were observed in fast Fourier transform (FFT) images.

Similar to the above results, LiF was observed as the most dominant inorganic species in the XPS results of the SEI layer (FIGS. 10 and 11). In particular, the absence of S, N and B elements in the SEI layer means that LiF was formed by non-fluorination reaction of FEC rather than $BF_4^-$ or TFSI-.

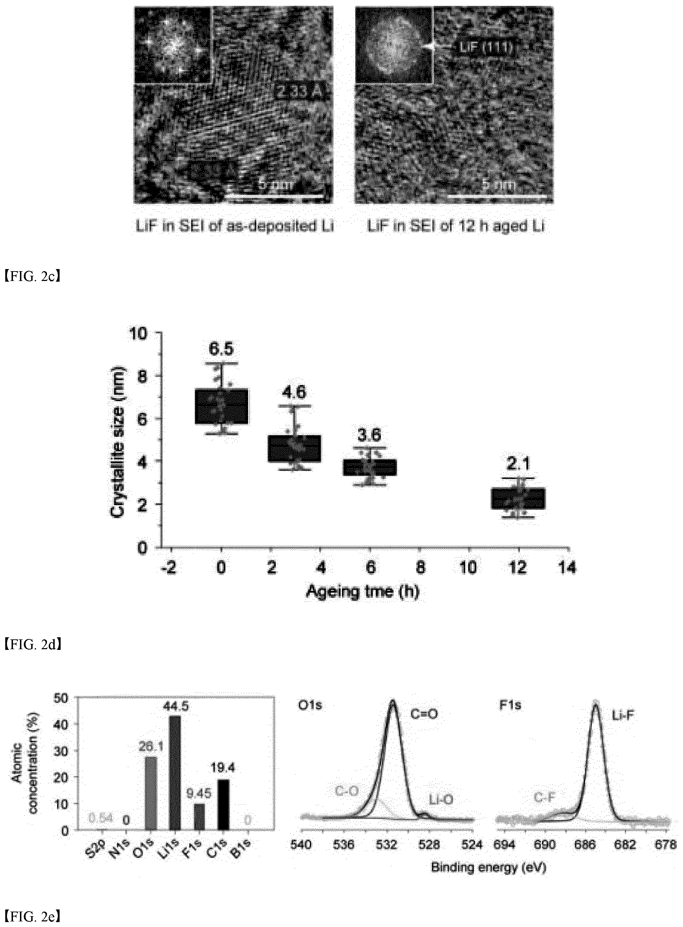

The SEI on the electrodeposited lithium surface has a mosaic structure observed in conventional carbonate electrolytes. As indicated by the cyan highlights, LiF species have crystallized and are scattered at specific locations in the SEI. It can be confirmed that the large LiF mosaic structure observed on the electrodeposited Li surface gradually disappears, and after 6~12 hours, fine LiF crystals are densely distributed on the SEI. The high-magnification TEM images and FFT images provide information about the atomic arrangement of LiF species in SEI (FIG. 2b). The single crystal LiF observed in an initial stage was pulverized into fine and vitreous LiF after 12 hours. A short-range structural order of about 2 nm (i.e., several layers of LiF grid) was observed in the atomic image, which resulted in the appearance of a LiF 110 signal in the FFT image. As a result of a statistical examination of the crystallin size, the average crystalline size was shown to gradually decrease from the initial 6.5 nm to 2.1 nm (FIG. 2c). In addition, it was confirmed that the thickness of SEI decreased from 13.3 nm to 9.1 nm as the aging time passed.

In the $LiBF_4$-free electrolyte (0.8 M LiTFSI THP +20% FEC), no significant changes in the crystallite size or microstructure of SEI were observed during the aging period of time, which suggests that the SEI thickness increases (FIG. 12), and $LiBF_4$ is involved in the time dependence of the microstructure of the SEI.

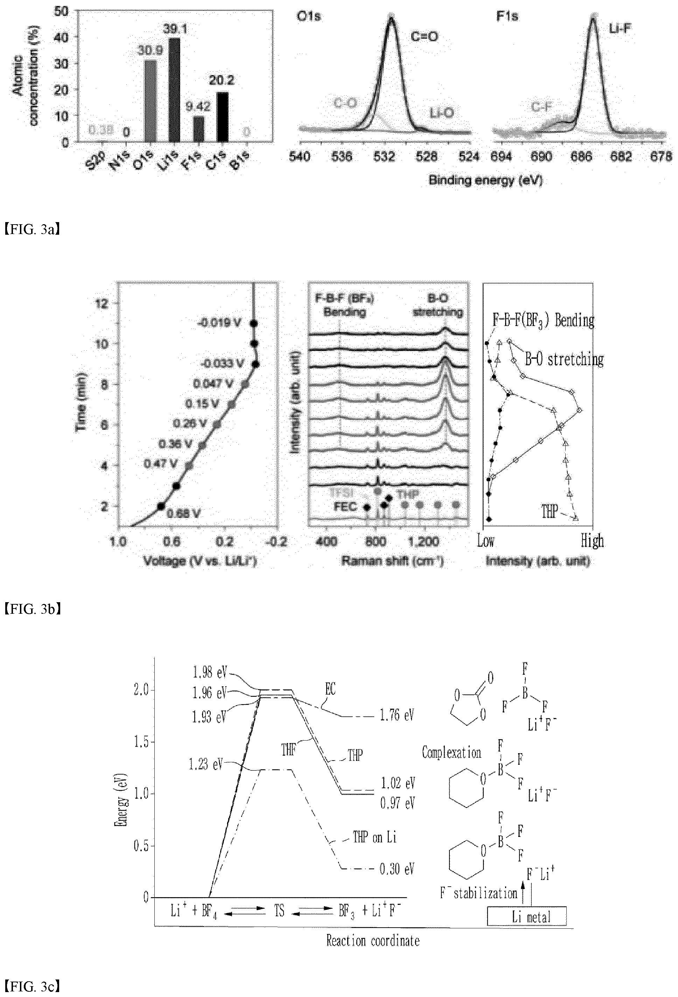

There was little change in the atomic concentration or the ratio of bonded states (especially the amount of LiF, FIGS. 2d and 2e) in the SEI of the Li surface electrodeposited and aged for 12 hours, which suggests that the decrease in LiF crystalline size in the borate-pyran-based electrolyte was not caused by irreversible dissolution of LiF into the electrolyte phase.

The size reduction of LiF crystalline body and SEI thickness reduction observed in cryo-TEM cannot be explained by the typical SEI growth with aging time observed in a typical electrolyte system. Based on this, it can be expected that LiF reorganization occurs in the fluoroborate-cyclic ether-based electrolyte.

In order to confirm the change of the SEI microstructure with time in SEI microstructure in borate-pyran-based electrolyte, the chemical properties of THP for $LiBF_4$ and Li were investigated.

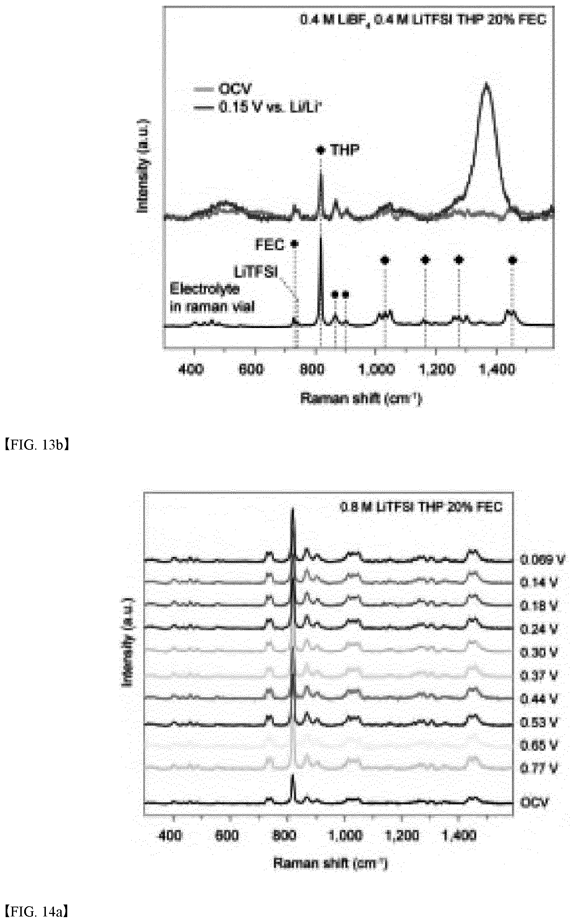

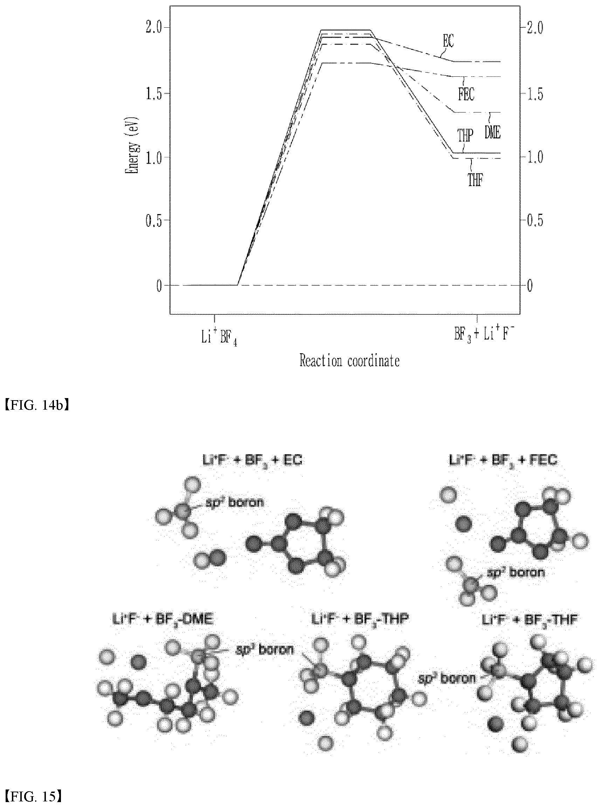

As can be seen in the Raman spectroscopy(SERS) experiment of (FIG. 3a, FIG. 13), the signals of THP, FEC and LiTFSI (each 817 $cm^{-1}$, 732 $cm^{-1}$ and 741 $cm^{-1}$, FIG. 14a) were clearly observed at the anode/electrolyte interface under open circuit voltage conditions. The signal of $LiBF_4$ is difficult to detect because the Raman scattering signal of $BF_4^-$ may be hidden by the fluorescence signal of $BF_4^-$.

While the potential is dropping (e.g., gradual equipotential with the Li surface), a new pair of peaks (~490 $cm^{-1}$ and ~1350 $cm^{-1}$) are gradually strengthened, which may correspond to F-B-F bending in $BF_3$ and B-O stretching modes. From the F-B-F bending of $BF_3$ and B-O stretching during the potential drop, it can be seen that $BF_3$ and ether group are complexed to the THP molecule on the anode surface.

The two peaks were not observed in the electrolyte solution containing no $LiBF_4$. FIG. 14b supports that they were derived from the $BF_4$ complexation reaction of $BF_3^-$ and THP. Subsequently, if the potential exceeds 0 V and Li is electrodeposited on Ag, the surface signal of $BF_3$-THP at the electrode decreases, and the signal of the bulk electrolyte (THP) increases due to the reduction in SERS activity. Despite this, the signal of $BF_3$-THP is continuously observed on the surface of the lithium precipitate during lithium plating. Although it is generally known that $LiBF_4$ is converted to $BF_3$ by thermal decomposition, the SERS results indicate that $BF_3$-THP can be formed even at room temperature on the electrode surface where the potential of the pyran solvent is low.

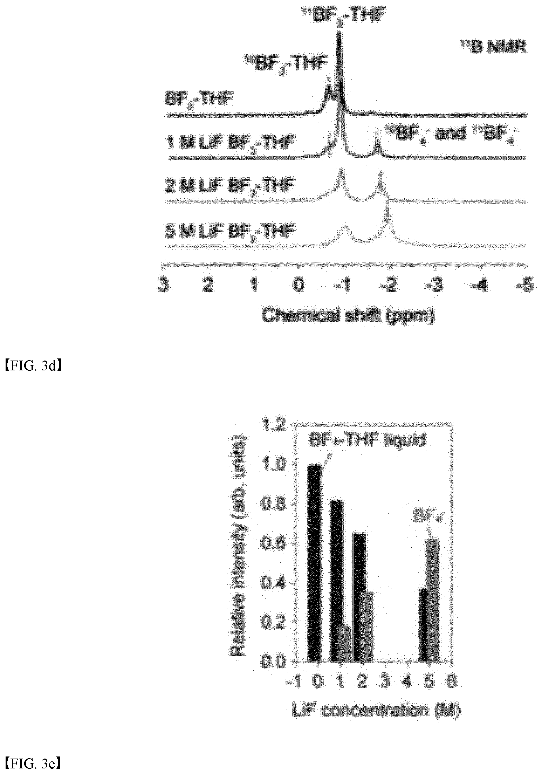

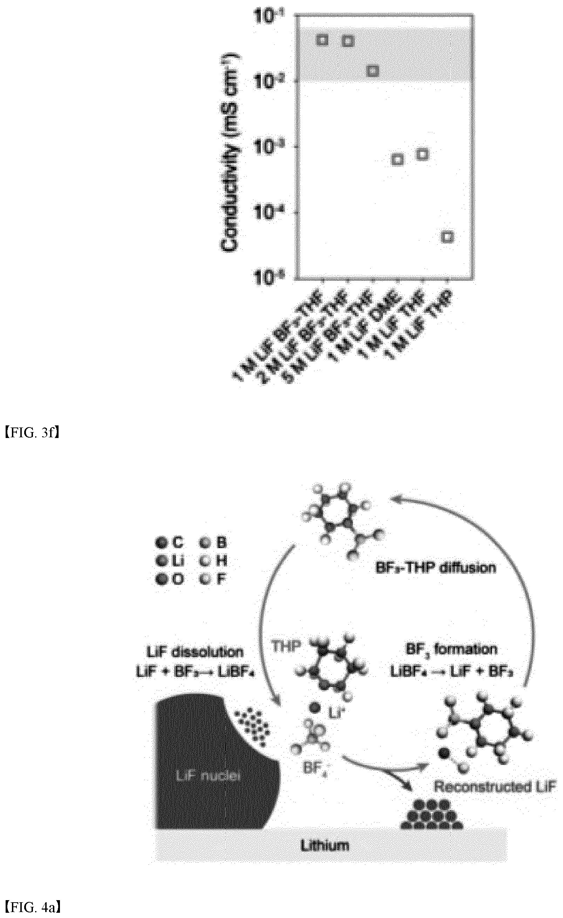

In FIG. 3, DFT calculations were performed to investigate the formation of BF3-THP on the Li0 surface in pyran solvent. For THP and THF molecules, the activation barriers for the $BF_3$ complexation reaction were 1.98 eV and 1.92 eV, and the reaction enthalpies were 1.02 eV and 0.96 eV, respectively.

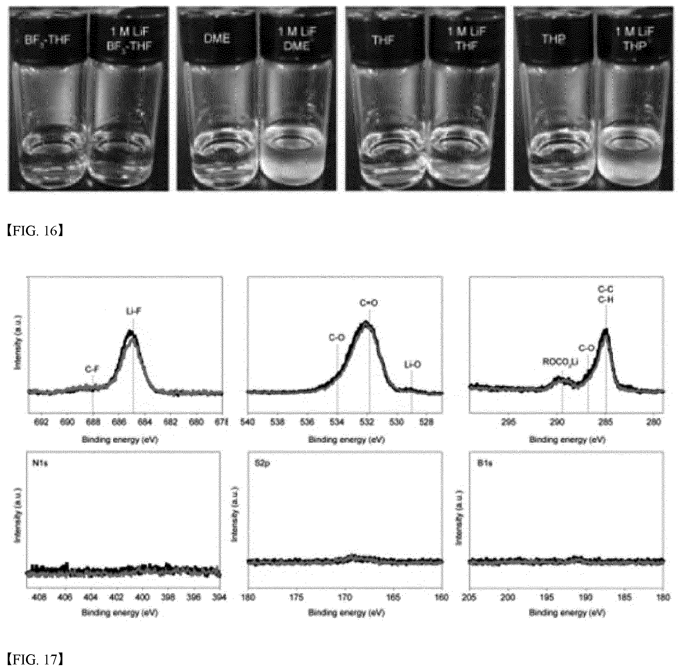

In the case of ethylene carbonate(EC), $BF_3$ did not form a stable adduct and existed as free $BF_3$ in the sp2 hybridization structure with a high reaction enthalpy of 1.76 eV. This result suggests that the $BF_3$ complexation reaction is more likely to occur in ether solvents. This is because the energy of $BF_3$ can be stabilized by the cationic bond between the boron of $BF_3$ and the ether group (FIG. 15).

However, THP has a lower endothermic reaction enthalpy than carbonate solvents, but the predicted equilibrium constant (*Kequilibrium* = $e$ -$\Delta Grxn/kT$, with the entropy item neglected at room temperature) is $5.62\times10^{-18}$, Therefore, the concentration of $BF_3$-THP in the bulk electrolyte is expected to be very low, which can be confirmed by the absence of $BF_3$-THP signal before the potential drop in the SERS experiment (in-situ SERS). Importantly, the complexation reaction of $BF_3$ and THP is highly likely to occur on the Li0 surface, showing that the activation barrier is 1.23 eV and the reaction enthalpy is 0.30 eV. Assuming that the predicted equilibrium constant is $8.44\times10^{-6}$, and the activity of the solid LiF precipitate is consistent with the reaction of $LiBF_4\leftrightarrow LiF+BF_3$, the concentration of $BF_3$-THP is calculated to be about 0.5 ppm at the Li electrode. Such calculation results support the observation of the BF3-THP signal on the anode surface with low potential.

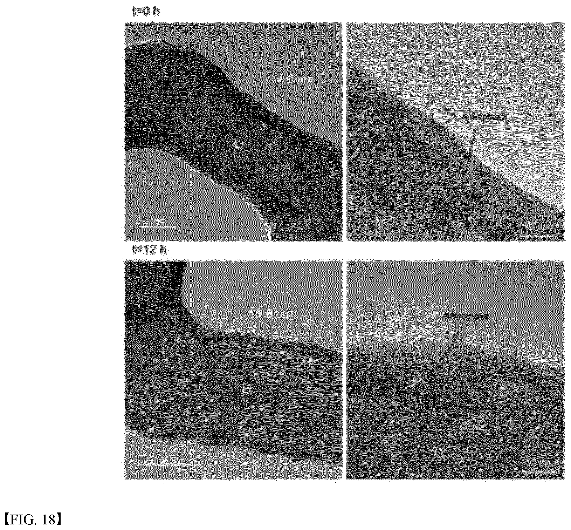

The density of state(DOS) shows that the 2p orbital of F-, which appeared near the Fermi level in bulk THP, moves below the Fermi level on the Li0 surface (FIG. 16). This indicates that the 2p orbital of F accepts electrons from Li0. In other words, it can be seen that the electropositive Li0 donates electrons to the electronegative F atom to lower the activation barrier and reaction enthalpy. Unlike the bulk $LiBF_4$/THP-based electrolyte, when THP is applied, it is expected to play an important role in promoting the $BF_3$ complexation reaction on the Li0 surface through energy stabilization of F- on the Li0 surface. $BF_3$ adducts are generally known to react with fluorine salts, and in this specification, the effect of $BF_3$ adducts on LiF crystals was investigated. The 1 M solution of LiF in $BF_3$-THF was completely transparent and yellow in color, while LiF was not completely soluble in common organic solvents (FIG. 17).

As a result of observing the state of boron in the LiF solution of $BF_3$-THF through $^{11}$B NMR, it was confirmed that as the concentration of LiF increased, the amount of $BF_3$-THF decreased and the amount of $LiBF_4$ increased (FIGS. 3c and d). This indicates that $BF_3$-THF and LiF react to convert to $LiBF_4$.

The LiF solution of $BF_3$-THF shows an ionic conductivity of $10^{-1}\sim10^{-2}$ mS cm$^{-2}$ (FIG. 3e), while 1M LiF DME, THF and THP shows ionic conductivities that are two times lower, indicating that $BF_3$-THP and LiF have been converted to dissociative $LiBF_4$.

In the energy diagram of FIG. 3b, the reaction of $BF_3+LiF\rightarrow LiBF_4$ is more exothermic at the bulk THP than at the Li0 surface, and therefore, it can be expected that LiF in the external SEI will be more likely to be thermodynamically dissolved than near the Li0 surface.

Based on the formation of $BF_3$-THP on Li0 and the regeneration of $LiBF_4$, LiF reorganization in borate-pyran based electrolyte can be understood through the mechanism in FIG. 3f. Specifically, the initial SEI containing LiF particles is formed on Li0, and Li passivation is not yet perfect in an initial stage, whereby $LiBF_4$ and THP can contact the Li0 surface. $BF_3$-THP is formed on the surface of Li0 to precipitate LiF on Li0, and $BF_3$-THP reacts with the initial LiF particles and is converted back to $LiBF_4$. $LiBF_4$ forms $BF_3$-THP while precipitating LiF again at the site where Li0 is exposed. By repeating this process, the initial LiF particles in SEI are reorganized in a way that gradually blocks new Li0 surfaces, as seen in cryo-TEM observations, and finally passivates the Li surfaces into fine LiF crystals.

**Experimental Example 3: Analysis of Li morphology and Coulombic efficiency**

Fluoroborate-cyclic ether based electrolyte was compared with a conventional carbonate electrolyte(1M $LiPF_6$ EC/EMC 1:1 v/v +2% VC) and a locally high concentration electrolyte(LHCE, 1.5M LiFSI DME/TTE 22:78 v/v) to investigate the morphology, coulombic efficiency/inefficiency and corrosivity of Li precipitates.

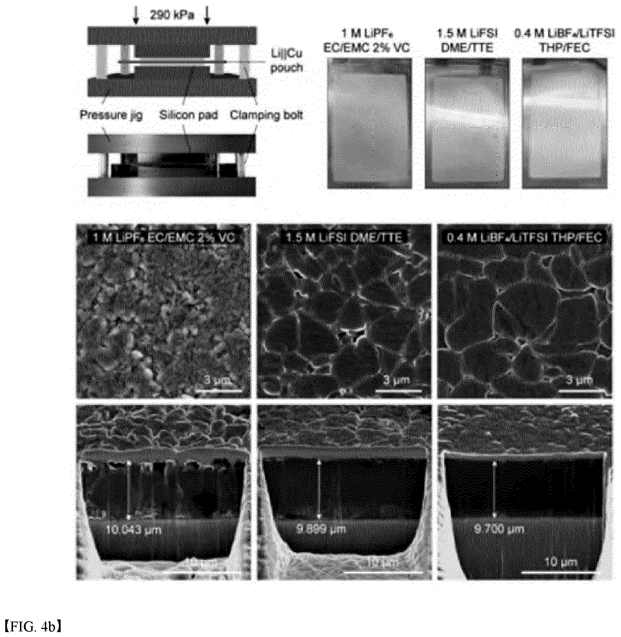

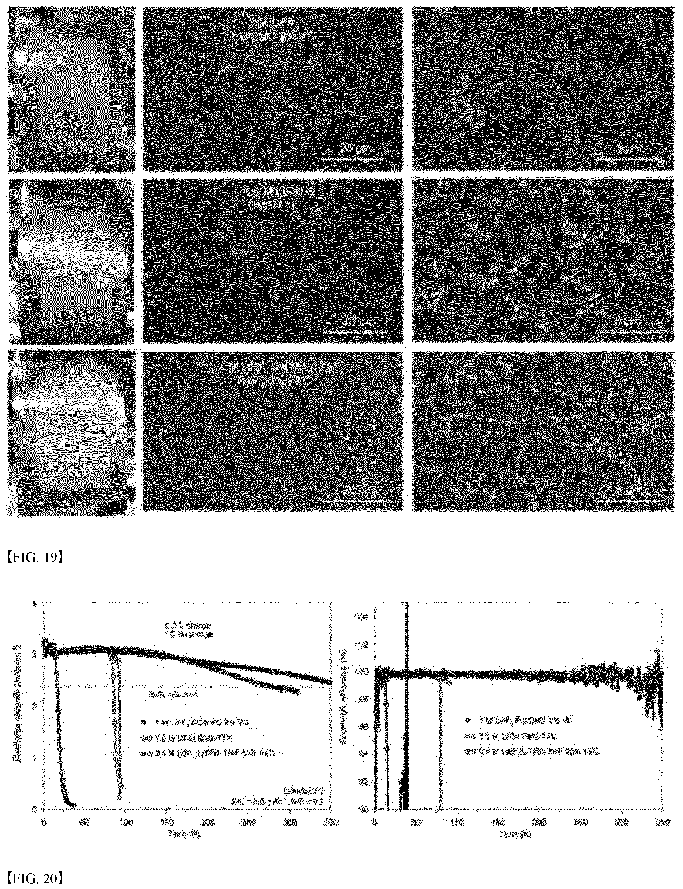

The morphology of the lithium precipitate was confirmed by applying a pressure of 290 kPa to the bolt clamp using a customized pressure jig (FIGS. 4a and 18). The lithium deposited in the three electrolytes showed a shiny silver color with no significant difference when viewed with the naked eye. However, SEM observations showed a morphology in which moss relatively grows to the lithium deposited in the existing carbonate electrolyte. In the other two electrolytes (LHCE and borate-pyran based electrolyte), dendrite-free Li with a diameter of about 3 $\mu$m was observed. In particular, LHCE and borate-pyran based electrolytes formed dense and uniform cross-sectional lithium morphologies. This dense morphology could not be observed in the LiTFSI THP:FEC electrolyte (FIG. 19).

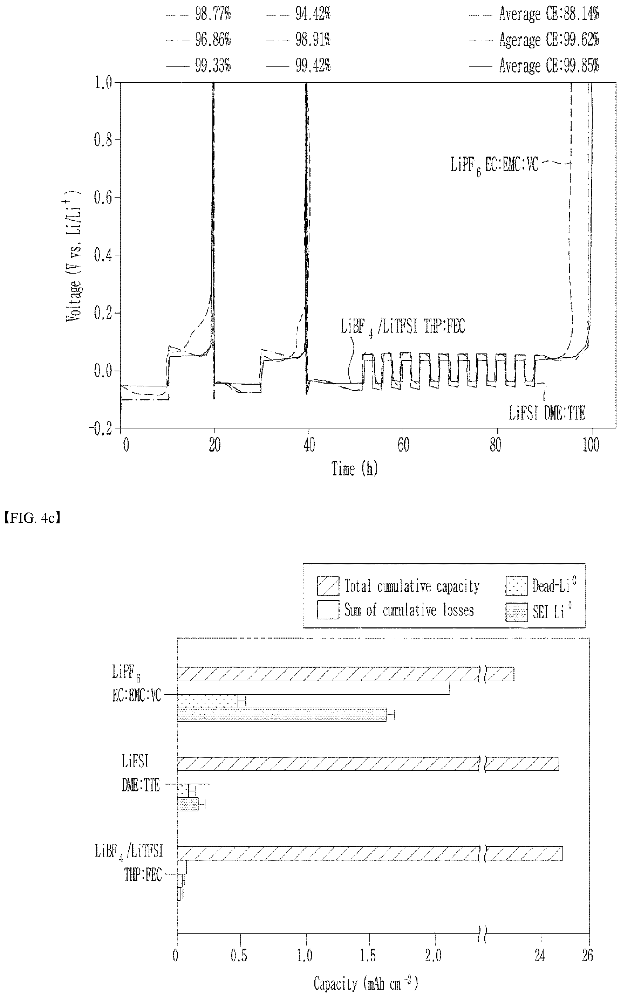

The coulombic efficiency of lithium plating/stripping on copper and lithium metal substrates was measured. In FIG. 4b, the first cycle (0.5 mA cm$^{-2}$ and 5 mAh cm$^{-2}$) coulombic efficiencies of each electrolyte were about 98.8%, 96.9%, and 99.3% for the carbonate electrolyte, LHCE, and borate-pyran based electrolyte, respectively. In particular, the 1 cycle coulombic efficiency of the carbonate electrolyte was found to be higher than that of LHCE, which is presumed to be because the efficiency of carbonate electrolyte, which has a relatively poor Li form, can be greatly increased under uniform pressure.

The fluoroborate-cyclic ether-based electrolyte showed Li cycle efficiencies of 99.33% and 99.42% in the first and second cycles on the Cu substrate, respectively. Then, the average efficiency on the Li substrate through the modified Aurbach method was 88.14% and 99.62% for the carbonate electrolyte and LHCE electrolyte, respectively. In the case of the LHCE electrolyte, the Li cycle efficiency of the recently reported LHCE or fluorine-based solvent electrolyte showed similar values to the results (99.5%~99.6%) measured by the Aurbach method. The average efficiency of the fluoroborate-cyclic ether-based electrolyte is 99.85%, which is one of the highest values among non-aqueous electrolytes known to date.

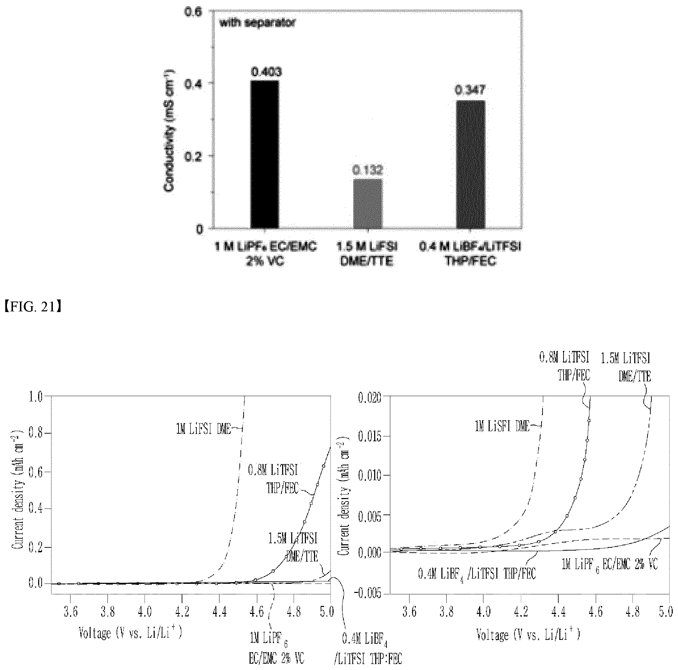

In order to grasp the cause of Coulombic inefficiency during lithium plating/stripping, the lithium loss path was quantified through titration gas chromatography (TGC, FIG. 20).

In FIG. 4c, the total cumulative capacity, the sum of cumulative loss, and the amount of dead Li0 and SEI Li$^+$ were plotted by applying the Aurbach method followed by TGC. Carbonate electrolyte and LHCE formed SEI with 6.65% and 0.71% of the total cumulative capacity using Li source, respectively.

Unlike the other two electrolytes, the borate-pyran based electrolyte had less Li loss (0.23% of total cumulative capacity) due to the formation of SEI than the formation of dead Li0. This shows that the borate-pyran based electrolyte has a lower Coulombic inefficiency for SEI formation than the conventional carbonate electrolyte and LHCE system.

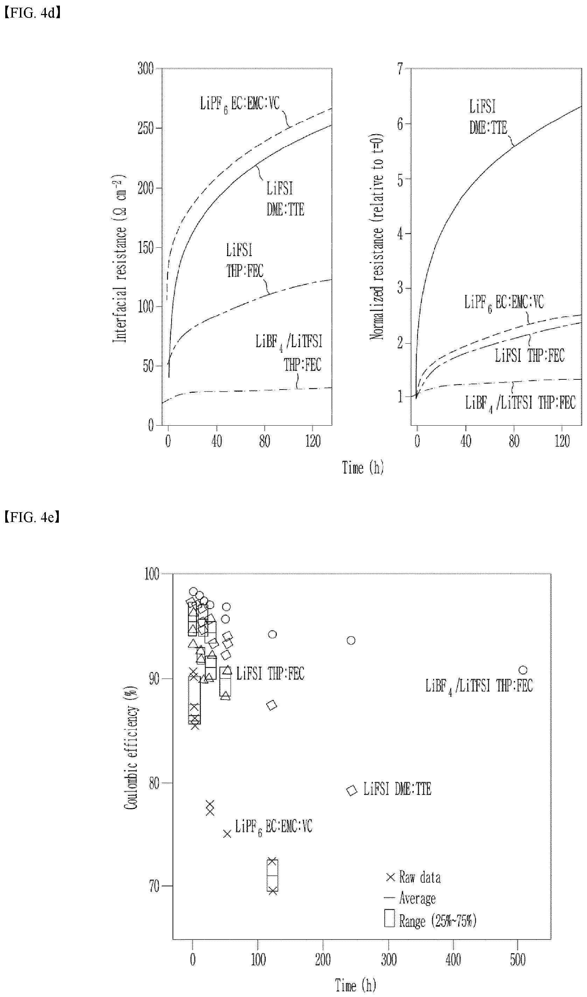

The corrosivity of the electrolyte was confirmed by measuring the time-dependent interfacial resistance ($R_{interface}$) for each electrolyte. FIG. 4d shows that the initial interfacial resistance and the change with aging time differ for each electrolyte. The conventional carbonate electrolyte showed the highest $R_{interface}$ (100~250 $\Omega$ cm$^{-2}$), which indicates that the SEI component formed in the carbonate electrolyte has higher resistance than that in the ether electrolyte.

LHCE showed a higher $R_{interface}$ of 40 $\Omega$ cm$^{-2}$ in the initial state than the borate-pyran electrolyte (20 $\Omega$ cm$^{-2}$), and increased to 245 $\Omega$ cm$^{-2}$ after aging for 5 days, while the fluoroborate-cyclic ether-based electrolyte showed only 31 $\Omega$ cm$^{-2}$ even after aging for 5 days.

In particular, such low interfacial resistance values were not observed in the absence of LiBF$_4$. The degree of long-term corrosion of lithium and electrolyte due to aging can be clearly compared by observing normalized resistance.

The LHCE system having high corrosivity showed the fastest SEI growth, with a 6-fold increase in $R_{interface}$ over 5 days of aging, which corresponds to about twice that of conventional carbonate electrolyte or LiTFSI THP:FEC electrolyte. In particular, the borate-pyran based electrolyte only increased the $R_{interface}$ by 23% during 5 days of aging. The electrolyte without LiBF$_4$ (LiTFSI THP:FEC) did not show such a low SEI increase rate. From this, it can be seen that LiF reconstruction by LiBF$_4$ in fluoroborate-cyclic ether-based electrolyte can reduce the SEI increase rate.

The corrosion rate of Li electrodeposited in the electrolyte was quantified through time-dependent CE loss as well as the intrinsic corrosivity of the electrolyte, wherein CE is affected by the surface area (i.e., morphology, FIG. 4e) of the electrodeposited Li. In the case of lithium stripping after initial lithium plating followed by 5 min aging, CEs of 96.5% for LHCE, 96.9% for borate pyran electrolyte, and 85% for conventional carbonate electrolyte were observed in the coin cell configuration.

During the 2-day aging period, the conventional carbonate electrolyte and LHCE showed CE losses of 10.7% and 4.70%, respectively, which indicates that both low high CE electrolyte and high CE electrolyte involve significant lithium corrosion during aging. The fluoroborate-cyclic ether based electrolyte showed only 1.02% CE loss during aging for 2 days, and showed long-term CE losses of 3.86% after 10 days, 6.56% after 21 days, and 14.9% after 3 months which was much lower than in other electrolyte systems (FIG. 21). When LiBF$_4$ was not included in the electrolyte, this alleviation of CE loss was not observed.

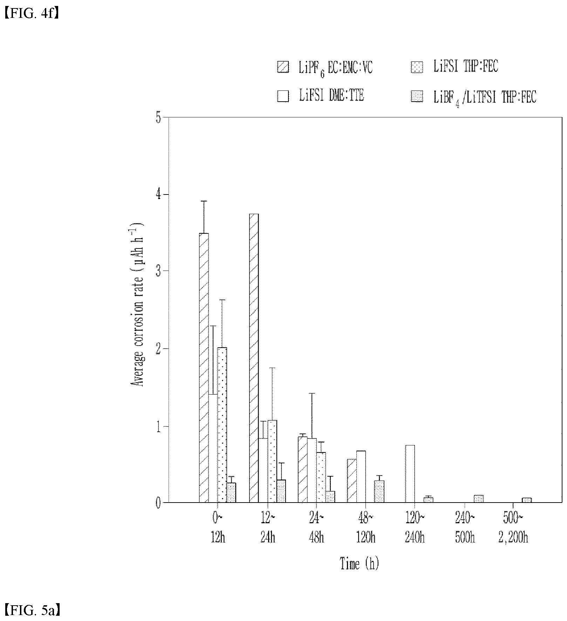

The average corrosion rate for each period is shown in FIG. 4f. The carbonate electrolyte showed a high corrosion rate of >3.5 $\mu$Ah h$^{-1}$ for up to 24 hours, which may be due to the large surface area of lithium precipitates. EIS results show that LHCE is more corrosive than carbonate electrolyte, but due to the low surface area of the deposited Li, the corrosion rate was 0.8 $\mu$Ah h$^{-1}$, which was lower than that of the carbonate electrolyte.

The fluoroborate-cyclic ether based electrolyte showed a low corrosion rate of about 0.1 $\mu$Ah h$^{-1}$ after 120 hours, and the Li deposited in LHCE and fluoroborate-cyclic ether based electrolyte showed almost identical dense morphology in SEM images, it is judged that fluoroborate-cyclic ether based electrolyte has high passivation due to this low corrosion rate.

Therefore, it is anticipated that the fluoroborate-cyclic ether-based electrolyte will be able to minimize electrolyte molecule loss and lithium loss due to SEI formation on electrodeposited lithium or self-corrosion of dead Li0 that has gradually developed over the entire life of the cell.

**Experimental Example 4: Li∥NCM811 performance under severe conditions**

The fluoroborate-cyclic ether-based electrolyte has an oxidation stability of about 5V compared to $Li/Li^+$, which corresponds to the electrolyte requirements necessary for driving LMBs based on >4V anode.

Through linear scanning voltammetry (LSV) measurements of several electrolytes, a general trend was confirmed that the presence of FEC together with $LiBF_4$ can increase the oxidation stability of an ether solvent-based electrolyte.

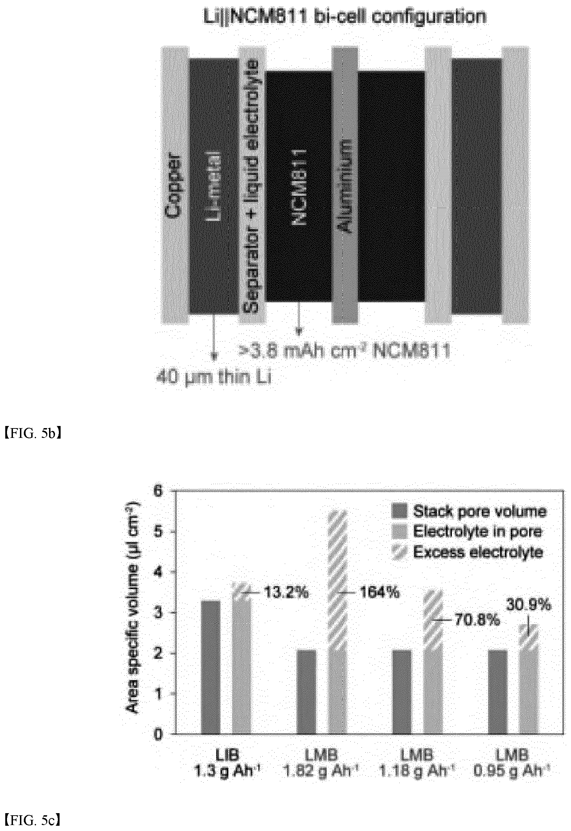

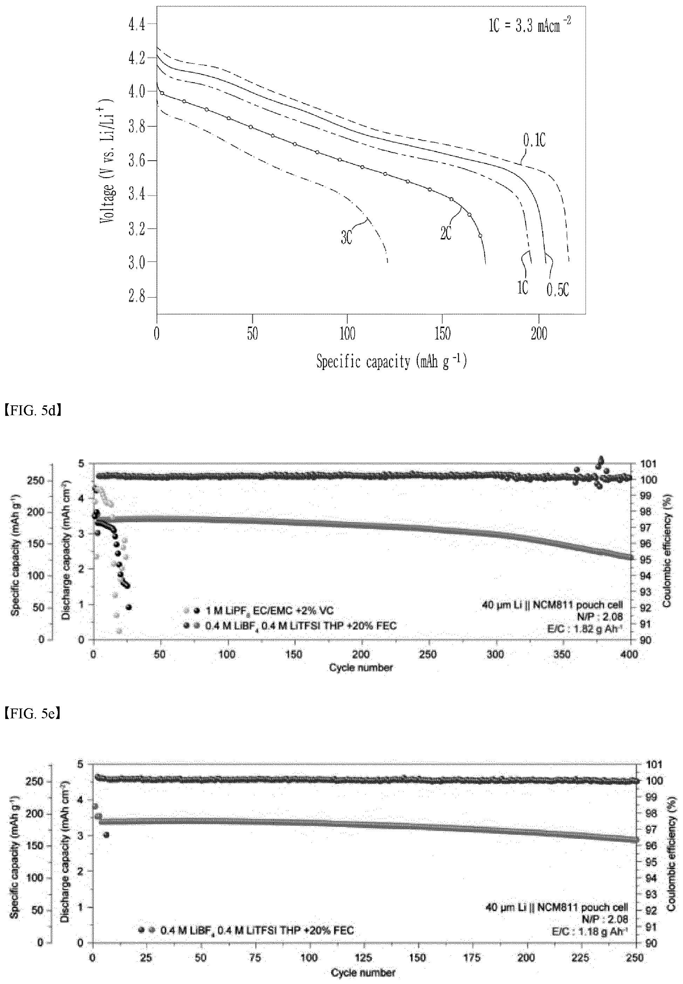

The double-sided coated NCM811 (18.78 mg $cm^{-2}$, 3.89 mAh $cm^{-2}$) was paired with a Li anode (40 $\mu$m, N/P ratio 2.08) in a pouch-type full cell (FIG. 5a), and two volume factors of injected liquid electrolyte were used as shown in FIG. 5b. Although the value of 1.82 g $Ah^{-1}$ is a low E/C ratio compared to the latest LMB reported so far, it means that the volume of injected liquid even after filling the pores of the cell much surpasses common LIB.

In order to confirm that lowering the corrosivity of the electrolyte makes it possible to drive very dilute electrolyte LMB (E/C about 1 g $Ah^{-1}$), LMB with an E/C ratio of 1.18 g $Ah^{-1}$, which is close to the excess electrolyte volume of LIB, was also evaluated. Based on these cell parameters, the estimated energy density was 424 Wh $kg^{-1}$ at E/C 1.82 g/$Ah^{-1}$ and 456 Wh $kg^{-1}$ at E/C 1.18 g/$Ah^{-1}$ (Table 1).

[Table 1]

| | LI∥NMC811 (1.93 g $Ah^{-1}$) | LI∥NMC811 (1.25 g $Ah^{-1}$) |
|---|---|---|
| Al current collector (13 $\mu$m) | 3.51 mg $cm^{-2}$ | 3.51 mg $cm^{-2}$ |
| Cu current collector (8 $\mu$m) | 7.17 mg $cm^{-2}$ | 7.17 mg $cm^{-2}$ |
| Lithium metal (40 $\mu$m) | 2.14 mg $cm^{-2}$ | 2.14 mg $cm^{-2}$ |
| NMC811 active material (61 $\mu$m) | 18.78 mg $cm^{-2}$ | 18.78 mg $cm^{-2}$ |
| PE separator (19 $\mu$m) | 1.77 mg $cm^{-2}$ | 1.77 mg $cm^{-2}$ |
| Electrolyte | E/C=1.92 g $Ah^{-1}$ | E/C=1.24 g $Ah^{-1}$ |
| Discharge capacity | 3.72 8 mAh $cm^{-2}$ | 3.8 mAh $cm^{-1}$ |
| Average voltage | 3.86 V | 3.86 V |
| Total stack energy (bi-cell) | 28.72 mWh $cm^{-2}$ | 28.72 mWh $cm^{-2}$ |
| Total stack weight (bi-cell) | 77.42 mg $cm^{-2}$ | 77.42 mg $cm^{-2}$ |
| **Stark gravimetric energy density** | **414.9 Wh $kg^{-1}$** | **447.3 Wh $kg^{-1}$** |
| **Stack volumetric energy density** | **1292.3 Wh $L^{-1}$** | **1292.3 Wh $L^{-1}$** |
| Cycle number | - cycles | - cycles |

The voltage profiles of pouch cells prepared with three electrolytes were investigated according to cell capacity and specific capacity (FIG. 5c). The fluoroborate-cyclic ether based electrolyte showed specific capacities during 1C, 2C, and 3C discharge, respectively. The fluoroborate-cyclic ether based electrolyte has high ionic conductivity (0.35 $\Omega$ $cm^{-2}$ including a separator) and low interfacial resistance, which contributes to high rate capability.

In conclusion, provided herein is a fluoroborate-cyclic ether based electrolyte for LMB. The fluoroborate-cyclic ether-based electrolyte has low corrosivity, and finely passivates the lithium electrolyte interface through LiF reconstitution, thereby minimizing the Coulombic inefficiency of forming SEI on the lithium. Additionally, the fluoroborate-cyclic ether-based electrolyte shows the ideal type of lithium deposition and the high lithium plating/stripping efficiency (average CE of 99.86%), and meets the requirements necessary for long-term operation of LMB at low N/P and E/C ratios.

In particular, the prototype pouch cell containing a nickel-rich NCM811 anode (3.83 mAh $cm^{-2}$) and a thin Li anode (N/P 2) showed excellent cycle life and high energy density of 500 cycles or more at an E/C of 1.82 g $Ah^{-1}$ (424 Wh $kg^{-1}$) and 250 cycles or more at an E/C of 1.18 g $Ah^{-1}$ (456 Wh $kg^{-1}$), which alleviates the irreversibility caused by the corrosivity of the electrolyte, thereby realizing long-cycle LMB under conditions of less than 2 g $Ah^{-1}$.

Claims

1. An electrolyte composition comprising:

   an ether-based solvent; and
   a fluoroborate-based lithium salt or a non-fluoroborate-based lithium salt dissolved in the ether-based solvent, wherein the fluoroborate-based lithium salt or the non-fluoroborate-based lithium salt and the ether-based solvent form a complex.

2. The electrolyte composition according to claim 1, wherein the fluoroborate-based lithium salt includes a fluoroborate-based lithium salt of the following Formula 1,

   [Formula 1]      $LiBF_xR_y$

   wherein R is $CF_3$ or styrene, and x+y=4.

3. The electrolyte composition according to claim 1, wherein the ether-based solvent is a cyclic ether-based solvent.

4. The electrolyte composition according to claim 1, wherein the ether-based solvent has one ether group.

5. The electrolyte composition according to claim 1, wherein the fluoroborate-based lithium salt and the ether-based solvent form a trifluoroborate-ether complex.

6. The electrolyte composition according to claim 1, wherein the non-fluoroborate-based lithium salt includes a lithium salt of an anion having a Group 13 element other than boron as a central atom, or a lithium salt of a halide-based anion having a boron central atom and consisting of halides other than fluoride.

7. The electrolyte composition according to claim 1, wherein the ether-based solvent includes at least one solvent selected from the group consisting of tetrahydrofuran(THF), tetrahydropyran(THP), furan, pyran, oxirane, oxetane, oxepane, and dioxane.

8. The electrolyte composition according to claim 2, wherein the fluoroborate-based lithium salt is $LiBF_4$, and the ether-based solvent is tetrahydropyran(THP).

9. The electrolyte composition according to claim 2, wherein the electrolyte composition further comprises one or more selected from the group consisting of an ion-conductive lithium salt and an additive.

10. The electrolyte composition according to claim 9, wherein the ion-conductive lithium salt includes at least one lithium salt selected from the group consisting of lithium bis(trifluoromethanesulfonyl)imide (LiTFSI), lithium bis(fluorosulfonyl)imide (LiFSI), lithium bis(pentafluoroethanesulfonyl)imide (LiBETI), lithium triflate (LiTf), lithium cyano(trifluoromethanesulfonyl)imide (LiCTFSI), $LiNO_3$, $LiClO_4$, $LiAsF_6$, $LiPF_6$, $LiSbF_6$, lithium difluoro(oxalato)borate (LiDFOB), and lithium bis(oxalato)borate (LiBOB), and
    the additive includes at least one additive selected from the group consisting of fluoroethylene carbonate (FEC), difluoroethylene carbonate (DFEC), trifluoroethylene carbonate (TFEC), tetrafluoroethyl trifluoroethyl ether (TFTFE), 1,1,2,2-tetrafluoroethyl-2,2,3,3-tetrafluoropropyl ether (TTE), bis(2,2,2-trifluoroethyl)ether (BTFE), 1H,1H,5H-ocafluorpentyl-1,1,2,2-tetrafluoroethyl ether (OFE), and 1, 1,2,2-tetrafluoroethyl-1H, 1H,5H-octafluoropentyl ether (TFOFE).

11. The electrolyte composition according to claim 10, wherein the ion-conductive lithium salt is LiTFSI, and the additive is FEC as a LiF-forming agent.

12. The electrolyte composition according to claim 9, wherein the anion of the ion conductive lithium salt has a lower $Li^+$ binding energy than the anion of the fluoroborate-based lithium salt.

13. The electrolyte composition according to claim 2, wherein the electrolyte composition has B-O stretching and F-B-F bending signals in surface-enhanced Raman spectroscopy (SERS) analysis.

14. A lithium metal battery comprising:

the electrolyte composition according to claim 1;
an anode including a lithium metal thin film formed on an anode current collector;
a cathode including a cathode active material layer formed on a cathode current collector; and
a separator formed between the anode and the cathode.

15. The lithium metal battery according to claim 14, wherein the fluoroborate-based lithium salt and the ether-based solvent form a trifluoroborate-ether complex on a surface of the lithium metal thin film.

16. The lithium metal battery according to claim 14, wherein the lithium metal battery further comprises an SEI layer formed on the lithium metal thin film,
wherein the SEI layer has only a signal for LiF (111) or LiF (220) lattice in a fast Fourier transform (FFT) image.

17. The lithium metal battery according to claim 14, wherein the SEI layer is passivated into LiF crystals through a reorganization process in which $BF_3$-THP is formed on the lithium metal thin film and LiF is precipitated on lithium metal (Li0).

【FIG. 1a】

【FIG. 1b】

【FIG. 1c】

【FIG. 1d】

【FIG. 1e】

【FIG. 2a】

【FIG. 2b】

LiF in SEI of as-deposited Li · · · · · LiF in SEI of 12 h aged Li

【FIG. 2c】

【FIG. 2d】

【FIG. 2e】

【FIG. 3a】

【FIG. 3b】

【FIG. 3c】

【FIG. 3d】

【FIG. 3e】

【FIG. 3f】

【FIG. 4a】

【FIG. 4b】

【FIG. 4c】

【FIG. 4d】

【FIG. 4e】

【FIG. 4f】

【FIG. 5a】

【FIG. 5b】

【FIG. 5c】

【FIG. 5d】

【FIG. 5e】

【FIG. 5f】

【FIG. 6】

【FIG. 7】

【FIG. 8】

【FIG. 9】

【FIG. 10】

【FIG. 11】

【FIG. 12a】

【FIG. 12b】

【FIG. 13a】

【FIG. 13b】

【FIG. 14a】

【FIG. 14b】

【FIG. 15】

【FIG. 16】

【FIG. 17】

【FIG. 18】

【FIG. 19】

【FIG. 20】

【FIG. 21】

<table>
<tr><td colspan="2">INTERNATIONAL SEARCH REPORT</td><td>International application No.<br><br>**PCT/KR2023/012358**</td></tr>
</table>

**A. CLASSIFICATION OF SUBJECT MATTER**

**H01M 10/0569**(2010.01)i; **H01M 10/0568**(2010.01)i; **H01M 10/052**(2010.01)i; **H01M 4/38**(2006.01)i

According to International Patent Classification (IPC) or to both national classification and IPC

**B. FIELDS SEARCHED**

Minimum documentation searched (classification system followed by classification symbols)

H01M 10/0569(2010.01); H01M 10/052(2010.01); H01M 10/0525(2010.01); H01M 10/058(2010.01); H01M 4/13(2010.01); H01M 4/583(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 금속 전지(lithium metal battery), 전해질(electrolyte), LiBF4, 테트라하이드로피란(tetrahydropyran, THP), 고체 전해질 계면(solid electrolyte interphase, SEI), 착물 (complex), 플루오로에틸렌 카보네이트(Fluoroethylene carbonate, FEC), 비스(트리플루오로메탄술포닐)이미드리튬 (LiTFSI)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2011-0076920 A (TOYOTA JIDOSHA KABUSHIKI KAISHA et al.) 06 July 2011 (2011-07-06)<br>See claims 1-3 and 6; and paragraphs [0009], [0036], [0038], [0054]-[0055], [0084]-[0086] and [0088]-[0090]. | 1-17 |
| Y | KR 10-2006-0097483 A (SAMSUNG SDI CO., LTD.) 14 September 2006 (2006-09-14)<br>See claims 8, 15 and 16. | 6 |
| Y | KANAMURA, K. et al. XPS analysis of lithium surfaces following immersion in various solvents containing LiBF4. Journal of the Electrochemical Society. 1995, vol. 142, no. 2, pp. 340-347.<br>See abstract; pages 342, 343 and 347; and figure 6. | 14-17 |
| A | JP 2014-022328 A (TOYOTA MOTOR CORP.) 03 February 2014 (2014-02-03)<br>See entire document. | 1-17 |

☑ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **27 November 2023** | **27 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/012358**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2009-0034382 A (NATIONAL UNIVERSITY CORPORATION SHIZUOKA UNIVERSITY et al.) 07 April 2009 (2009-04-07)<br>See entire document. | 1-17 |

Form PCT/ISA/210 (second sheet) (July 2022)

**INTERNATIONAL SEARCH REPORT**
Information on patent family members

International application No.

**PCT/KR2023/012358**

| Patent document cited in search report | | | Publication date (day/month/year) | Patent family member(s) | | | Publication date (day/month/year) |
|---|---|---|---|---|---|---|---|
| KR | 10-2011-0076920 | A | 06 July 2011 | CN | 102150314 | A | 10 August 2011 |
| | | | | CN | 102150314 | B | 26 February 2014 |
| | | | | JP | 2010-067496 | A | 25 March 2010 |
| | | | | JP | 5306749 | B2 | 02 October 2013 |
| | | | | KR | 10-1328317 | B1 | 11 November 2013 |
| | | | | US | 2011-0229772 | A1 | 22 September 2011 |
| | | | | US | 8986896 | B2 | 24 March 2015 |
| | | | | WO | 2010-029971 | A1 | 18 March 2010 |
| KR | 10-2006-0097483 | A | 14 September 2006 | KR | 10-0696795 | B1 | 19 March 2007 |
| JP | 2014-022328 | A | 03 February 2014 | None | | | |
| KR | 10-2009-0034382 | A | 07 April 2009 | CA | 2661226 | A1 | 20 March 2008 |
| | | | | CA | 2661226 | C | 29 November 2011 |
| | | | | CN | 101512825 | A | 19 August 2009 |
| | | | | CN | 101512825 | B | 05 October 2011 |
| | | | | EP | 2063482 | A1 | 27 May 2009 |
| | | | | EP | 2063482 | A4 | 09 February 2011 |
| | | | | EP | 2063482 | B1 | 09 March 2016 |
| | | | | JP | 5155868 | B2 | 06 March 2013 |
| | | | | US | 2011-0008685 | A1 | 13 January 2011 |
| | | | | US | 8241787 | B2 | 14 August 2012 |
| | | | | WO | 2008-032795 | A1 | 20 March 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2023012358 W
- KR 1020220105317
- KR 1020230103596